# EUROPÄISCHE PATENTSCHRIFT

(11) **EP 1 723 076 B1**
(45) Veröffentlichungstag und Bekanntmachung des Hinweises auf die Patenterteilung: **03.12.2008**
(21) Anmeldenummer: 05707303.3
(22) Anmeldetag: 10.02.2005
(51) Int. Cl.: C01B 33/12, C09C 1/30

(54) **VERFAHREN ZUR HERSTELLUNG MONODISPERSER SiO2-PARTIKEL**
METHOD FOR THE PRODUCTION OF MONO-DISPERSED SiO2 PARTICLES
PROCEDE DE PRODUCTION DE PARTICULES DE SiO2 MONODISPERSEES

(30) Priorität: 08.03.2004 DE 102004011110
(43) Veröffentlichungstag der Anmeldung: 22.11.2006
(73) Patentinhaber: Merck Patent GmbH, 64293 Darmstadt (DE)
(72) Erfinder: KUEBELBECK, Armin, 64625 Bensheim (DE)
(86) Internationale Anmeldenummer: PCT/EP2005/001323
(87) Internationale Veröffentlichungsnummer: WO 2005/085135

(56) Entgegenhaltungen:
- EP-A- 1 036 763
- DE-A1- 3 534 143
- JP-A- 2003 002 632

## Beschreibung

Die vorliegende Erfindung betrifft Verfahren zur Herstellung monodisperser SiO₂-Partikel durch hydrolytische Polykondensation von Tetraalkoxysilanen und/oder Organotrialkoxysilanen, wobei die hydrolytische Polykondensation in einem Medium umfassend Wasser, ein oder mehrere Lösungsvermittler und ein oder mehrere Amine erfolgt und wobei man hoch monodisperse, unporöse Partikel erhält.

Sphärische SiOₙ-Teilchen genießen besonderes Interesse als wertvolle Hilfsmittel im technisch-wissenschaftlichem Bereich sowie als interessante, wissenschaftliche Studienobjekte. Ein wesentliches Anwendungsgebiet derartiger Teilchen, insbesondere wenn diese von definierter und einheitlicher Größe sind, vornehmlich im nm- und µm-Bereich, ist ihre Verwendung in der Normung, beispielsweise als Kalibrierungsstandards zur Größenbestimmung kleiner Objekte wie Staubpartikel oder Zellen. Als weiteres Anwendungsgebiet kommt die Verwendung als Sorptions- bzw. Trägermaterial auf dem Feld der Chromatographie und den davon abgeleiteten Trenntechniken in Betracht. Bei allen derartigen Anwendungen spielen Teilchengröße und Teilchengrößenverteilung eine erhebliche Rolle, so dass es wichtig ist, derartige Teilchen Bezug auf diese Charakteristika in vorherbestimmbarer reproduzierbarer Weise erzeugen zu können.

Aus dem Stand der Technik ist bekannt, dass sich kugelförmige SiO₂ Partikel durch hydrolytische Polykondensation von Tetraalkoxysilanen erhalten lassen, beispielsweise aus den Publikationen von W. STÖBER et al. in J. Colloid and Interface Science 26, 62 (1968) und 30, 568 (1969) sowie dem US Patent 3,634,588, denen die grundlegenden Reaktionsbedingungen hierfür zu entnehmen sind. Diese sehen vor, dass Tetraalkoxysilan in einen Überschuss eines wässrig-alkoholisch-ammoniakalischen Hydrolysegemisches gebracht wird, wobei durch geeignete Maßnahmen wie Rühren, Schütteln oder Ultraschallbehandlung für eine intensive Durchmischung gesorgt wird. Hierbei lassen sich je nach Wahl der konkreten experimentellen Parameter SiO₂-Partikel unterschiedlicher mittlerer Teilchengröße und variierender Teilchengrößenverteilung erhalten. Gemäß den Angaben der zitierten Publikationen wurden SiO₂-Partikel mit mittleren Teilchengrößen zwischen 0.05 und 2 µm (in einzelnen Fällen bis zu ca. 3 µm) erhalten, wobei der Einfluss verschiedener Kieselsäureester, von Ammoniak- und Wasserkonzentration sowie von verschiedenen Alkoholen im Hydrolysegemisch untersucht wurden.

Aus der EP 1 036 763 ist ein Verfahren zu Herstellung gefärbter und fluoreszenter Polykieselsäure-Partikel bekannt. Auch bei den dort beschriebenen Verfahren ist Ammoniak die wesentliche Komponente bei der hydrolytischen Polykondensation.

Bei den oben genannten Verfahren erweist sich die hohe Flüchtigkeit des Ammoniaks als problematisch, insbesondere wenn die Verfahren bei erhöhten Temperaturen durchgeführt werden. Ammoniak-Gas bildet im Gegensatz zu anderen Gasen, z.B. Chlorwasserstoff-Gas, kein Azeotrop mit Wasser. Es ist eine dem Fachmann bekannte physikalische Gesetzmäßigkeit, dass sich Gase in kalten Flüssigkeiten erheblich besser lösen als in warmen Flüssigkeiten. Bei der Hydrolyse von Tetraalkoxysilanen ist der pH-Wert für die Reaktionsführung ein wichtiger Parameter, der über die Dauer der Reaktion möglichst konstant sein sollte. Insbesondere bei erhöhten Temperaturen kann diese Vorgabe mit Ammoniak in der Lösung nicht eingehalten werden. Der Gehalt an Ammoniak in der Lösung verändert sich kontinuierlich und somit auch der pH-Wert der Lösung. Ein geschlossener Reaktor kann hierbei auch keine Abhilfe bieten, da sich das Ammoniak-Gas oberhalb des Flüssigkeitsspiegels anreichert. Diese Problematik verschärft sich insbesondere beim Wechsel der Anlagenkonfiguration bzw. beim Aufskalieren der Reaktion in größere Reaktionsgefäße. Hierbei verändern sich neben dem Oberflächen/Volumen-Verhältnis auch andere Parameter, wie z.B. die Führung der Abluft. Dies alles führt zu schlecht reproduzierbaren Ergebnissen, die sich vor allem im Teilchendurchmesser und in der Partikelgrößenverteilung wiederspiegeln.

Es bestand daher die Aufgabe, Verfahren zur Herstellung monodisperser SiO₂-Partikel zu finden, die die oben genannten Nachteile nicht aufweisen. Überraschenderweise wurde gefunden, dass die erfindungsgemäßen Verfahren die oben genannten komplexen Anforderungen erfüllen.

Gegenstand der Erfindung sind daher Verfahren zur Herstellung von kugelförmigen SiO₂-Partikel durch hydrolytische Polykondensation von Tetraalkoxysilanen und/oder Organotrialkoxysilanen, wobei die hydrolytische Polykondensation in einem Medium umfassend Wasser, ein oder mehrere Lösungsvermittler und ein oder mehrere Amine erfolgt und wobei man hoch monodisperse, unporöse Partikel erhält.

Die erfindungsgemäßen Verfahren haben den Vorteil, dass durch den Einsatz von Aminen die hydrolytische Polykondensation unabhängig von der Reaktionstemperatur erfolgen kann. Die Konzentration der Amine im Reaktionsmedium bleibt konstant, so dass bei der gewünschten Reaktionstemperatur reproduzierbare und einfach aufskalierbare Reaktionen durchgeführt werden können. Auf diese Weise lassen sich Pulver enthaltend SiO₂-Partikel mit einer einheitlichen und reproduzierbaren Teilchengröße bzw. Partikelgrößenverteilung herstellen. Darüber hinaus erweisen sich die Amine als effektive Basen, das heißt es sind nur geringe Mengen der entsprechenden Amine für die Durchführung der Hydrolyse nötig. Weiterhin handelt es sich bei den bevorzugt eingesetzten Aminen um preiswerte großtechnische Produkte, die zudem keine Emissionsprobleme in der Prozessführung, insbesondere in der Abluft, aufweisen. Als weiterer Vorteil hat sich herausgestellt, dass, im Gegensatz zur Hydrolyse im ammoniakalischen Medium, eine nur geringe Belegung der Reaktionsgefäßwandung erfolgt, die als Nebenreaktion zu einer Ausbeutenverringerung führt. Die erfindungsgemäßen Verfahren stellen damit eine kostengünstige Alternative zu den bekannten Verfahren aus dem Stand der Technik dar, die sich neben der vereinfachten Reaktionsführung durch Reproduzierbarkeit und verbesserte Ausbeuten auszeichnen. Da die verwendeten organischen Basen im Gegensatz zu ammoniakalischen Lösungen wasserfrei erhältlich sind, ist ferner eine gezielte Reaktionsführung mit äquivalenten Molmengen Wasser zur Hydrolyse möglich, d.h. nach erfolgter Hydrolyse ist das zugesetzte Wasser vollständig umgesetzt und das Reaktionsprodukt liegt idealerweise in einer weitgehend wasserfreien Suspension vor. Dies ist für eine nachfolgende Funktionalisierung der Oberfläche der entstandenen SiO₂-Partikel mit tri-Alkoxy-Silanen oder tri-Chlor-Silanen besonders vorteilhaft. Die Silane können unmittelbar nach der Fällung ohne Abtrennung der Partikel oder aufwendiges Entfernen des Wassers mit Schleppmitteln, der Suspension zugesetzt werden. Die störende Nebenreaktion, Hydrolyse der Silane mit Wasser ohne Belegung der Partikel, wird dabei idealerweise umgangen.

In der einfachsten Ausführungsform der erfindungsgemäßen Verfahren erfolgt die Herstellung der monodispersen SiO₂-Partikel in einem sogenannten Eintopfverfahren, das einfach auszuführen ist und die einfache Mischung der einzelnen Komponenten umfasst. Hierzu wird das Tetraalkoxysilan und/oder Organotrialkoxysilan in ein als Hydrolysegemisch geeignetes Medium umfassend Wasser, ein oder mehrere Lösungsvermittler und ein oder mehrere Amine gebracht und innig durchmischt. Als geeignete Tetraalkoxysilane können alle problemlos hydrolysierbaren Kieselsäureorthoester aliphatischer Alkohole eingesetzt werden. In erster Linie kommen hierbei die Ester aliphatischer Alkohole mit 1 bis 5 C-Atomen in Betracht, das heißt die Alkoxygruppe kann eine Methoxy-, Ethoxy-, Propoxy-, Butoxy- oder Pentoxygruppe sein, wobei die jeweiligen Isomeren berücksichtigt sind. Die oben genannten Tetraalkoxysilane können einzeln, aber auch im Gemisch eingesetzt werden. Bevorzugt eingesetzt werden die Kieselsäureorthoester der C₁ -C₃-Alkohole, insbesondere Tetraethoxysilan. Als Lösungsvermittler sind grundsätzlich alle Lösemittel geeignet, die mit Tetraalkoxysilanen und/oder Organotrialkoxysilanen und Wasser unbegrenzt oder auch eingeschränkt mischbar sind. Entsprechende Lösungsvermittler können ausgewählt sein aus der Gruppe der Alkohole, Ketone, Dialkylsulfoxide, Pyrrolidone, Alkylnitrile, Furane und/oder Dioxane. Beispiele für die genannten Lösungsvermittler sind Aceton, Tetrahydrofuran, Dimethylsulfoxid, 1-Methyl-2-pyrrolidon, 1,4-Dioxan oder Acetonitiril. Vorzugsweise handelt es sich bei den Lösungsvermittlern um Alkohole, wobei als Alkoholkomponente aliphatische C₁ -C₅ Alkohole besonders geeignet sind. Bevorzugt werden C₁ -C₃-Alkohole wie Methanol, Ethanol, n- oder i-Propanol sowie 1- oder 2-Butanol eingesetzt. Diese können einzeln, aber auch im Gemisch miteinander im Hydrolysegemisch vorliegen. Die ein oder mehreren Amine können ausgewählt sei aus der Gruppe der primären, sekundären oder tertiären organischen Amine. Vorzugsweise handelt es sich bei den Aminen um Alkanolamine, Diamine, Polyamine und/oder primäre Alkylamine, insbesondere um Aminoethanol, Ethylendiamin, Octylamin, Diethylentriamin. Der Anteil des Amins im als Hydrolysegemisch geeigneten Medium beträgt 0.1 bis 5 Gew.-%, vorzugsweise 0.5 bis 3 Gew.-%.

Die Zugabe des Tetraalkoxysilans zum Hydrolysegemisch erfolgt vorzugsweise in einer Portion, wobei der Reaktand in reiner Form oder auch in Lösung in einem der genannten Lösungsvermittler vorliegen kann. Insgesamt wird bei dieser Verfahrensvariante mit Reaktionsgemischen gearbeitet, die ca. 2 bis 25 Gew.-% Wasser, 0.1 bis 5 Gew.-%, vorzugsweise 0.5 bis 3 Gew.-% Amin, 70 bis 90 Gew.-% Lösungsvermittler und 2 bis 40 Gew.-%, vorzugsweise 5 bis 15 Gew.-% Tetraalkoxysilan, bezogen auf die Gesamtmischung, enthalten. Nach dem Zusammenbringen der Reaktanden setzt die Reaktion sofort oder nach wenigen Minuten ein, was sich durch eine alsbaldige Opaleszenz bzw. Trübung des Reaktionsgemisches durch die entstehenden Teilchen zeigt. Nach im allgemeinen nicht mehr als 15-30 Minuten, in ungünstigen Spezialfällen auch länger, ist die Reaktion abgelaufen. Je nach Wahl der Reaktanden sowie ihrer Konzentrationen im Reaktionsgemisch lassen sich in Übereinstimmung mit dem aus dem Stand der Technik bekannten Verfahren Teilchen mit mittlerem Durchmesser zwischen etwa 0.01 und etwa 10 µm erhalten. Die hydrolytische Polykondensation erfolgt bei Temperaturen zwischen 25 und 78°C, vorzugsweise zwischen 30 und 75°C und insbesondere zwischen 40 und 55°C.

In einer weiteren Ausführungsform der erfindungsgemäßen Verfahren wird ein Saat-Aufwachsverfahren eingesetzt, bei dem man zunächst ein Sol von Primärteilchen erzeugt und anschließend derart, dass eine weitere Keimbildung verhindert wird, durch ein kontinuierliches, nach Maßnahme des Abreagierens kontrolliertes Zudosieren von entsprechendem Silan die erhaltenen SiO₂-Partikel auf die gewünschte Teilchengröße bringt. Diese Verfahrensvariante hat den Vorteil, dass sie eine besonders gute Kontrolle und Steuerung der Größe der SiO₂-Partikel erlaubt. In einem ersten Schritt der erfindungsgemäßen Ausführungsform wird zunächst ein Sol von Primärteilchen hergestellt. Zur Erzeugung der Primärteilchen kann eine Konzentration von Tetraalkoxysilan im Hydrolysegemisch zwischen etwa 2 bis etwa 40 Gew.-%, vorzugsweise im Bereich von 5 bis 15 Gew.-%, bezogen auf die Gesamtmischung gewählt werden. Man erhält hierbei Primärteilchen mit mittleren Durchmessern zwischen 0.01 und 1 µm. In diesem Stadium können dem Sol von Primärteilchen Proben entnommen werden, um die Teilchen beispielsweise mit Hilfe der Elektronenmikroskopie auf ihre Teilchengröße, Formtreue und Teilchengrößenverteilung zu untersuchen und die Porosität der Primärteilchen beispielsweise durch Gasadsorptionsmessung zu bestimmen.

Als vorteilhaft hat sich erwiesen, die Reaktion zur Erzeugung der Primärteilchen ebenfalls bei höherer Temperatur durchzuführen. Günstig sind hierbei Temperaturen zwischen 25 und 78°C, vorzugsweise zwischen 30 und 75°C uns insbesondere zwischen 40 und 55°C. Es zeigte sich, dass bei erhöhter Temperatur die Teilchengrößenstreuung abnimmt, allerdings auch die mittlere Teilchengröße. Bei niedrigeren Temperaturen, d.h. um Raumtemperatur, erhält man bei sonst gleichen Bedingungen größere Teilchen mit höherer Größenstreuung. Weiterhin ist hier auch vermehrt unerwünschte Agglomeratbildung zu verzeichnen.

Im zweiten Schritt der erfindungsgemäßen Verfahrensvariante erfolgt bei gleichmäßiger Durchmischung ein langsames, kontinuierliches Zudosieren von weiterem Tetraalkoxysilan zu dem Sol von Primärteilchen. Hierbei ist es wesentlich, dass die Geschwindigkeit des Zudosierens so gesteuert wird, dass ein sofortiges, vollständiges Abreagieren mit den im Sol vorliegenden Teilchen erfolgt, ohne dass ein Überschuss an Tetraalkoxysilan entsteht, aus dem sich Keime für neue Primärteilchen bilden können. Unter dieser Verfahrensmaßnahme des nach Maßgabe des Abreagierens kontrollierten Zudosierens von Tetraalkoxysilan wird ein gesteuertes Nachwachsen der Teilchen im Sol erreicht, wobei sich die letztendlich zu erzielende Teilchengröße nach der Menge des insgesamt zugesetzten Tetraalkoxysilans richtet. Die Menge des insgesamt zuzusetzenden Alkoxysilans ist im Prinzip unkritisch, solange das Hydrolysegemisch im Überschuss vorhanden ist, bzw. durch eventuelles Nachgeben von Hydrolysegemisch im Überschuss gehalten wird. Ein zeitliches Limit bei der Zugabe des Tetraalkoxysilans ist nicht gesetzt; die Zugabe kann sich über Stunden bis Tage erstrecken. Auch Unterbrechungen und Wiederaufnahme des Nachwachsens sind möglich, da die Teilchen in allen Stadien ihres Wachstums stabil sind. Auch im Nachwachsvorgang wird bevorzugt bei erhöhter Temperatur, etwa um 40°C, gearbeitet. Als untere Teilchengröße ist etwa 0.05 µm anzusetzen, bedingt durch die Mindestgröße der Primärteilchen. Erstaunlich und völlig unerwartet ist, dass sich die bei den Primärteilchen vorliegende breitere Teilchengrößenstreuung - die Standardabweichungen liegen dort durchschnittlich bei 5-25 % - nicht in den mit dem Nachwachsschritt erhältlichen Teilchen wiederfindet. Die so erhaltenen Teilchen weisen Standardabweichungen von nicht mehr als 20 %, vorzugsweise von nicht mehr als 10 % und insbesondere bevorzugt von nicht mehr als 5 % auf, sind also hoch monodispers. Offenbar erfolgt in diesem zweiten Schritt ein Angleich der ursprünglich vorliegenden Teilchen unterschiedlicher Größe und ein gleichmäßiges Weiterwachsen aller vorhandenen Teilchen bei entsprechender Abnahme der relativen Standardabweichung.

Es zeigt sich, dass die nach den oben genannten erfindungsgemäßen Verfahren erhaltenen Teilchen von gleichmäßiger Kugelgestalt sind und keinerlei Porosität aufweisen. Ihre durch Gasadsorptionsmessung bestimmte spezifische Oberfläche ergibt sich als die 1 bis 1.5fache theoretisch errechenbare Oberfläche, was bestenfalls auf eine geringfügige Oberflächenrauhigkeit schließen lässt, das Vorliegen von Poren jedoch ausschließt. Es wird angenommen, dass durch das langsame, kontinuierliche Nachwachsen ursprünglich in den Primärteilchen vorhandene Poren verschlossen werden und neue Poren sich nicht bilden können.

In einer weiteren Ausführungsform der bereits genannten erfindungsgemäßen Verfahrensvarianten ist es möglich, auch solche Teilchen zu erzeugen, die in der Matrix organisch modifiziert sind, also organische Gruppen kovalent gebunden enthalten. Derartige Verfahren sind prinzipiell bekannt. Hierzu ersetzt man in den erfindungsgemäßen Verfahren, beim Saat-Aufwachsverfahren vorzugsweise im Nachwachsschritt, 0.1 bis 100%, vorzugsweise 1-30% des eingesetzten Tetraalkoxysilans durch ein oder mehrere Organotrialkoxysilane, wie sie etwa zur Modifizierung von Kieselgelen bekannt sind. Die Organo-Gruppen in diesen Verbindungen können aliphatische Reste mit 1-20 C-Atomen sein, gegebenenfalls funktionalisiert, etwa durch Hydroxy-, Thio-, Amino-, Carboxyl-Gruppen oder Halogen sowie Alkenylreste. Der Einbau funktionalisierter Organogruppen in die SiO₂-Matrix der Teilchen ermöglicht im übrigen eine spätere weitere Modifizierung durch kovalente Bindungsknüpfung in bekannter Weise. Beispiele für derartige Organotrialkoxysilane sind etwa Methyltriethoxysilan, Ethyltriethoxysilan, Hexyltriethoxysilan, Octyltriethoxysilan, Dodecyltriethoxysilan, Octadecyltriethoxysilan, Vinyltriethoxysilan, 3-Hydroxypropyltriethoxysilan, 3-Chloropropyltriethoxysilan, 3-Aminopropyltriethoxysilan, 3-Glycidoxypropyltriethoxysilan, 3-Mercaptopropyltriethoxysilan, 3-Isothiocyanatopropyltriethoxysilan, 3-(Aminoethy1amino)-propyltriethoxysilan, 3-Methacryloxypropyltriethoxysilan, 3-Acetoxypropyltriethoxysilan, N-(3-Triethoxysilylpropyl)-N'-(I-Phenyl-1-hydroxyisopropyl)-thioharnstoff, N-(3-Triethoxysilylpropyl)-N'-(U-Phenylethy1)-thioharnstoff oder Mischungen hieraus.

Durch eine derartige organische Modifizierung werden die Eigenschaften der Teilchen hinsichtlich Unporosität und Monodispersität nicht beeinflusst, während im übrigen die bekannten, vorteilhaften Eigenschaften modifizierter Kieselgele wahrgenommen werden können. Selbstverständlich können auch nach dem erfindungsgemäßen Verfahren hergestellte, nicht modifizierte SiO₂-Partikel durch nachträgliche Behandlung nach Verfahren, wie sie für poröse Materialien (z. B. bei der Herstellung von Reversed-Phase-Chromatographie-Sorbentien) bekannt sind, oberflächlich organisch modifiziert werden.

In einer weiteren Ausführungsform der erfindungsgemäßen Verfahren werden bei der hydrolytischen Polykondensation zusätzlich ein oder mehrere Farbstoffe, insbesondere Fluoreszenzfarbstoffe, zugesetzt. Vorzugsweise handelt es sich bei dem Farbstoff um einen terminal silylierten (Fluoreszenz)farbstoff. Dabei kommt dem terminal silylierten (Fluoreszenz)farbstoff die allgemeine Formel R¹R²R³SiR⁴ zu, in der R¹, R² und R³ gleich oder verschieden sind und für Halogenatome, Alkyl-, Aryl-, Alkoxy oder Silyloxy-Gruppen stehen und R⁴ die komplexe Struktur A¹-Bₘ-Cₙ-A² besitzt, in der m und n die Werte Null und 1 annehmen können. Hierbei bedeutet A¹ eine Alkylkette oder eine heteroanaloge Struktur mit vorzugsweise 1 bis 20 Kettengliedern. B steht für eine funktionelle Sequenz, die im Einzelfall Carbonyl-, Oxycarbonyl-, Aminocarbonyl- bzw. Aminothiocarbonyl-Gruppen oder ein Heteroatom beispielsweise Sauerstoff, Stickstoff oder Schwefel bedeuten kann. C steht für eine bifunktionelle organische Sequenz mit Ketten- oder Ringstruktur, die mit A² in geeigneter Weise verbunden ist. Dabei handelt es sich vorzugsweise um eine Alkyleneinheit oder substituierte und heteroanaloge Alkylengruppen, die mit A² jeweils über ein Kohlenstoff-, Stickstoff-, Sauerstoff- oder Schwefelatom, beispielsweise als Ester oder Amid, verknüpft sind. Das bedeutet, dass die bifunktionelle Sequenz C in R⁴ auch für Strukturelemente von Hydroxy- oder Aminocarbonsäuren sowie deren Ester und Amide stehen kann. A² steht in der allgemeinen Formel R⁴ = A¹-Bₘ-Cₙ-A² für ein fluorophores System oder ein Farbstoffmolekül, das strukturell die Möglichkeit bietet an C, oder wenn n gleich Null ist an B bzw. wenn m und n gleich Null sind, an A¹ zu binden. Um dieses Bindungsverhalten zu realisieren, verfügt das Strukturelement A² über eine oder mehrere funktionelle Gruppen, die den üblichen Reaktionsschemata von Substitution oder Addition zugänglich sind. Dabei handelt es sich im Einzelfall um Carbonsäure- oder Sulfonsäuregruppen bzw. um deren aktivierte Derivate, um nukleophile Reste, wie Hydroxy-, Mercapto- oder Aminogruppen, um Strukturen, die über substituierbare Halogenatome verfügen, wie Halogenalkyl-, Halogenalkylcarbonyl- oder Halogenacylreste, um Epoxysequenzen oder analoge Systeme bzw. um Heterokumulene, wie Isocyanate oder Isothiocyanate, oder anderweitig aktivierte Mehrfachbindungssysteme. Es ist ebenso möglich, reaktive Textilfarbstoffe, z. B. vom Cibacron-Typ, der über reaktive Chlortriazinyl-Substrukturen verfügt, zum Aufbau der bindenden Sequenz in R⁴ zu nutzen. Für die Eignung als chromophores System in A² sind strukturell keine Einschränkungen vorhanden. Nach dem erfindungsgemäßen Verfahren können alle gängigen Chromophore bzw. Fluorophore, wie benzoide und chinoide Aromaten und Heteroaromaten, beispielsweise Triarylmethane, Anthrachinone, Chromene, Xanthene, Indole, Chinoline, Acridine, Phenoxazine, Phenothiazine und Phenazine, aber auch Azound Stilbenfarbstoffe, Indigoderivate, Phthalocyanine und andereTetrapyrrolfarbstoffe sowie Polymethine (Cyanine) in eine Polykieselsäure-Matrix eingearbeitet werden. Bei der Alkoxygruppe in R¹, R² und/oder R³ kann es sich um eine Methoxy-, Ethoxy-, Propoxy,- Butoxy-, oder Pentoxygruppe, vorzugsweise um eine Ethoxygruppe, handeln.

Aus synthesechemischer Sicht kann der Aufbau der Linkersequenz A¹-Bₘ-Cₙ-A² ein- oder mehrstufig ausgeführt werden. Es hat sich als günstig erwiesen, die Synthesestufen als Eintopf-Varianten durchzuführen. Dabei kann nicht ausgeschlossen werden, dass bedingt durch die Art und Anzahl der funktionellen Gruppen in den beteiligten Reaktanden Konstitutionsisomere oder Mehrfachverknüpfungen auftreten können, was jedoch für die Zielstellung der homogenen Partikelfärbung ohne Belang ist. Die zum Aufbau der Linkersequenz A¹-Bₘ-Cₙ-A² notwendigen Additions-und Substitutionsreaktionen werden in Lösemitteln durchgeführt, die mit dem Hydrolysegemisch bei der Partikelformation kompatibel sind. Dazu zählen beispielsweise Wasser, Alkohole und Ether und insbesondere dipolar aprotische Solventien, wie Aceton, Acetonitril, N,N-Dimethylformamid, N-Methyl-morpholinoxid oder Dimethylsulfoxid. Es besteht aber auch die Möglichkeit, zunächst in wenig polaren Lösemitteln, beispielsweise in (halogenierten) Kohlenwasserstoffen, zu arbeiten, diese Lösemittel zu evaporieren und den Rückstand in einen der vorstehend genannten Lösungsvermittler zu überführen. Damit wird sichergestellt, dass für den Aufbau der Linkersequenz A¹-Bₘ-Cₙ-A² auch hydrolyseempfindliche Reaktanden und Intermediate zum Einsatz gelangen können.

Im Prozess der Partikelformation können die terminal silylierten (Fluoreszenz)farbstoffe der allgemeine Formel R¹R²R³SiR⁴ entweder als isolierte chemische Verbindungen oder als in situ-Syntheseprodukte verwendet werden.

Dabei kann im Regelfall auf die Reinigung und Charakterisierung der terminal silylierten (Fluoreszenz)farbstoffe selbst sowie auf die der benötigten reaktiven Intermediate verzichtet werden, obwohl sie prinzipiell und unter Anwendung üblicher Mittel und Methoden möglich sind.

Um während der Partikelformation eine homogene Verteilung des (Fluoreszenz)farbstoffes zu erzielen, ist eine abgestimmte Reaktivität und ein geeignetes Verhältnis der Prekursoren Tetraalkoxysilan und terminal silylierter (Fluoreszenz)farbstoff erforderlich. Deshalb werden hauptsächlich Prekursoren verwendet, die über Ethoxysubstituenten am Silicium verfügen. Je nach dem (Fluoreszenz)farbstoff-Typ, dessen Derivatisierung und dem Verwendungszweck der zu synthetisierenden Polykieselsäure-Partikel kann das Verhältnis der Prekursoren relativ stark variieren und liegt üblicherweise zwischen 0.01 und 5 mol%.

Nach dem erfindungsgemäßen Verfahren ist es auch möglich, Farbnuancierungen und Mehrfachcolorierungen zu erreichen. Dazu werden bei der Partikelformation mehrere Prekursoren der allgemeinen Formel R¹R²R³SiR⁴, die sich in der Konstitution der verbundenen Sequenz A¹-Bₘ-Cₙ-A² und in der chemischen Struktur des fluorophoren Systems bzw. des Farbstoffes A² unterscheiden, gleichzeitig oder nacheinander dosiert. Es hat sich aber als günstig erwiesen, die Anzahl terminal silylierter (Fluoreszenz)farbstoffe, die sich hinsichtlich der chemischen Struktur des fluorophoren Systems bzw. des Farbstoffes A² unterscheiden, auf 2 bis 3 zu beschränken.

Die Copolykondensation zwischen den Prekursoren Tetraalkoxysilan und/oder Organotrialkoxysilan und terminal silylierter (Fluoreszenz)farbstoff kann ebenfalls standardmäßig in einem auf 25°C bis 78°C thermostatisierten Rührreaktor ausgeführt werden.

In einigen Fällen hat sich als sinnvoll bzw. notwendig erwiesen, der hydrolytischen Polykondensatiosreaktion neben verschiedenen Prekursoren weitere Additive zuzusetzen. So können verschiedene Tenside Mikroemulsionen als Reaktionsvolumina aufbauen oder Partikeldispersionen stabilisieren. Solche stabilisierenden Effekte können auch von als Peptisatoren wirksamen Metallsalzen ausgehen. Wird bei der Copolykondensation das Ziel verfolgt, die Polykieselsäure-Matrix anteilig durch analoge Strukturen, wie Aluminate oder Titanate, zu ersetzen oder mit anderen Metallen zu dotieren, kann dies erfolgen, indem Additive aus den entsprechenden Metallsalzen, wie z.B. entsprechenden Metallhydroxyden, -oxiden und -alkoxyden bzw. Koordinationsverbindungen und freie Liganden oder daraus resultierende Kombinationen zugesetzt werden. Die Dosierung von Additiven aus vorstehenden Bereichen erfolgt unabhängig oder in synergistischer Weise zu Metallverbindungen, die bereits gemäß der Farbstoffe enthaltenden Ausführungsform in der (Fluoreszenz)farbstoff-Komponente A², beispielsweise bei Metallphthalocyaninen oder Farblacken, enthalten sein können.

Die oben beschriebene Ausführungsform des erfindungsgemäßen Verfahrens bietet somit die Möglichkeit, monodisperse SiO₂-Partikel mit einstellbaren Durchmessern zwischen 0.05 µm und 10 µm herzustellen, die eine homogene und hohe (Fluoreszenz)farbstoffdichte bzw. Farb-/Fluoreszenzintensität aufweisen. Diese Partikel sind ebenfalls durch eine ausgeprägte Sphärizität, geringe Variationskoeffizienten in der Größenverteilung und eine geringe Porosität der Oberfläche charakterisiert. Das Verfahren ist so angelegt, dass die Polykieselsäure-Partikel einen unterschiedlichen Farbstatus aufweisen können. Solche Partikeltypen besitzen im Einzelfall die nachfolgenden Merkmale: Einfachfärbung, additive Mehrfachfärbung, Fluoreszenz in einem definierten Wellenlängenbereich, gegebenenfalls auch außerhalb des sichtbaren Bereiches, Fluoreszenz in mehreren definierten Wellenlängenbereichen sowie Färbung und Fluoreszenz. Ein wesentlicher Vorteil des Herstellungsverfahrens besteht darin, dass die resultierenden Partikel sowohl in den gängigen Puffern wie auch in allen gebräuchlichen Lösungsmitteln elutionsstabil sind. Selbst bei einem mehrstündigen Schütteln in N,N-Dimethylformamid wird keine signifikante Freisetzung an (Fluoreszenz)farbstoffen beobachtet

Derartig organisch modizifierte SiO₂-Partikel ermöglichen Anwendungen auf zahlreichen anderen Gebieten, beispielsweise als maßgeschneiderte Sorbentien für die Chromatographie.

Insbesondere eignen sich diese, nach dem erfindungsgemäßen Verfahren hergestellten, organisch modifizierten SiO₂-Partikel für die Verwendung in der Reversed-Phase-Chromatographie.

Aufgrund der großen Variabilität in bezug auf die Struktur eignen sich die nach den erfindungsgemäßen Verfahren hergestellten SiO₂-Partikel als Sorptionsmaterial in der Chromatographie, zur Isolierung und Reinigung von Nukleinsäuren und Proteinen, in Phagozytose-Untersuchungen, als Bestandteile in diagnostischen Arrays, als Festphasen für die Untersuchung von "Molecular Recognition"-Phänomenen und in heterogenkatalytischen Prozessen, als Baustein photonischer Kristalle und als Schmier- und/oder Poliermittel.

Der Einsatz dieser Teilchen erlaubt die Trennung von hochmolekularen Biomolekülen, wie etwa Peptiden, Proteinen oder Nucleinsäuren. Solche Moleküle sind z. B. Lysozym, Ribonuclease A, Urease, Transferrin, Insulin, Aldolase, Myoglobin, Katalase, Ovalbumin, LDH, PAP, α-Chymotrypsin, Peroxidase, Rinderserumalbumin, Ferritin, C₁-INA, Kreatin- Kinase, Carboanhydrase, Amylglucosidase, Hämoglobin, Interleukin u.a. Bei Verwendung der nach dem erfindungsgemäßen Verfahren hergestellten Teilchen für die Trennung solcher Biomoleküle ergeben sich Vorteile, die von herkömmlichen, hierbei verwendeten Materialien bisher nicht erreicht werden konnten.

Die kleine mittlere Teilchengröße, die sehr enge Teilchengrößeverteilung sowie die gegenüber z.B. porösen Materialien fehlende Diffusionsbarriere erzielen eine wesentlich höhere Effizienz der Säulen und damit auch eine höhere Nachweisgrenze. Weitere Vorteile liegen in den wesentlich kürzeren Analysenzeiten, die ungefähr um den Faktor 5 kürzer sind im Vergleich zu den Zeiten, die bei den herkömmlichen Materialien benötigt werden. Ferner sind die Substanzverluste wesentlich geringer als bei Verwendung von porösen Materialien. Für die Wahl des Lösemittels gibt es hierbei keinerlei Beschränkungen, alle bekannten Lösemittelsysteme können eingesetzt werden

Die nachfolgenden Beispiele sollen die Erfindung näher erläutern, ohne sie jedoch zu beschränken.

### Beispiel 1:

In einer Reihe von Versuchen werden verschiedene Amine eingesetzt, es wird aber auch der Einfluss der jeweiligen Konzentration des Amins in den erfindungsgemäßen Verfahren untersucht. Hierzu werden folgende Reaktionsbedingungen gewählt:
Mehrere klare Mischungen bestehend aus
7.5 ml Tetraethylorthosilicat (TEOS)
50 ml Ethanol (absolut) und
18.7 ml deionisiertes Wasser
werden parallel unter Rühren mit einem Magnetrührer auf 30°C erwärmt. Anschließend werden die in Tabelle 1 aufgeführten Mengen an unterschiedlichen Aminen zugesetzt.
In einer Vergleichsreaktion werden 11.7 ml Ammoniaklösung (25 Gew.-%) der Mischung zugesetzt und monodisperse Partikel mit einem Durchmesser von 0.5 µm erhalten.

**Tabelle 1: Ergebnisse der Versuche**

| Hydrolysemittel | Menge [ml] | Durchmesser der Partikel [µm] | Dispersität | Agglomeratbildung | Belegung der Wandung der Reaktionsgefäße |
|---|---|---|---|---|---|
| Ammoniak 25% | 11.7 | 0.5 | Mono | Keine | Leicht belegt |
| TMAH 25% | 2 | 0.5 | Poly | Stark | Stark belegt |
| Ethanolamin | 0.5 | ca. 1 | Mono | Leicht | Leicht belegt |
| Ethanolamin | 2 | ca. 0.6 | Mono | Ja | Nicht belegt |
| Ethylendiamin | 8 | >0.6 | Mono | Keine | Leicht belegt |
| Triethylamin | 1 | <0.1 | - | keine | - |
| Octylamin | 2 | <0.05 | - | Keine | Nicht belegt |

Aus der oben genannten Tabelle geht hervor, dass Amine und dabei insbesondere Ethanolamin und Ethylendiamin in den erfindungsgemäßen Verfahren vorteilhaft geeignet sind, monodisperse SiO₂-Partikel herzustellen.

### Beispiel 2: Herstellung monodisperser Silicapartikel mit äquimolaren Mengen an Wasser

Gemäß der Reaktionsgleichung 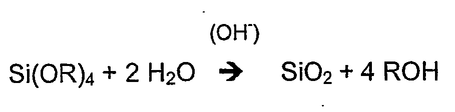 werden pro mol Tetraalkylsilikat 2 mol Wasser benötigt. Bedingt durch die wässrige Natur der im Stand der Technik stets verwendeten Ammoniaklösung war es nicht möglich, äquimolare Mengen an Wasser der Reaktion zuzusetzen. Wasser wird bei der Verwendung von Ammoniaklösung auch beim Verzicht der Zugabe zusätzlichen Wassers in fast allen Fällen in deutlichem Überschuss zugesetzt. Lediglich bei der Zugabe geringster Mengen Ammoniaklösung wäre dies prinzipiell möglich. Die Reaktionsführung ist dabei jedoch ausgesprochen unvorteilhaft.

In der in Tabelle 2 gezeigten Versuchsreihe wird unter erfindungsgemäßem Einsatz von Aminen die für die Hydrolyse notwendige Menge an Wasser bis auf äquimolare Mengen reduziert (siehe obige Reaktionsgleichung). Die Mischungen werden bei 40°C mittels Magnetrührer 3 Stunden gerührt.

Die erhaltenen Reaktionsprodukte werden unter einem Rasterelektronenmikroskop vermessen.

**Tabelle 2: Herstellung monodisperser Silicapartikel mit äquimolaren Mengen an Wasser**

| # | Hydrolysemittel | Menge [ml] | TEOS [g] bzw. [mol] | Wasser [ml] bzw. [mol] | Ethanol [ml] | Durchmesser [nm] *) |
|---|---|---|---|---|---|---|
| 1 | Ethylendiamin | 1 | 10,5 // 0,05 | 1,8 // 0,1 | 90 | 70-89 |
| 2 | Ethanolamin | 2 | 10,5 // 0,05 | 2,5 // 0,14 | 90 | 45-60 |
| 3 | Ethanolamin | 8 | 10,5 // 0,05 | 1,8 // 0.1 | 90 | 72-117 |
| 4 | Ethanolamin | 4 | 21,0 // 0,1 | 3,6 // 0,2 | 90 | 81-148 |
| 5 | Ethanolamin | 2 | 10,5 // 0,05 | 5,0 // 0,28 | 90 | 84-134 |
| 6 | Ethanolamin | 5 | 42,0 // 0,2 | 8,0 // 0,44 | 70 | 50-183 |

| | | | | | | |
|---|---|---|---|---|---|---|
| *) min-max Werte von ca. 50 ausgemessenen Partikeln | | | | | | |

Durch den erfindungsgemäßen Einsatz wasserfreier Basen kann die Reaktionsführung der Art gestaltet werden, dass das zur Hydrolyse benötigte Wasser gezielt in äquimolaren Mengen zugesetzt werden kann.

## Patentansprüche

1. Verfahren zur Herstellung von kugelförmigen SiO₂-Partikeln durch hydrolytische Polykondensation von Tetraalkoxysilanen und/oder Organotrialkoxysilanen, **dadurch gekennzeichnet, dass** die hydrolytische Polykondensation in einem Medium umfassend Wasser, ein oder mehrere Lösungsvermittler und ein oder mehrere Amine erfolgt.

2. Verfahren nach Anspruch 1, **dadurch gekennzeichnet, dass** man zunächst ein Sol von Primärteilchen erzeugt und anschließend derart, dass eine weitere Keimbildung verhindert wird, durch ein kontinuierliches, nach Maßnahme des Abreagierens kontrolliertes Zudosieren von entsprechendem Silan die erhaltenen SiO₂-Partikel auf die gewünschte Teilchengröße bringt.

3. Verfahren nach Anspruch 1 oder 2, **dadurch gekennzeichnet, dass** das Amin ausgewählt ist aus der Gruppe der primären, sekundären oder tertiären organischen Amine.

4. Verfahren nach Anspruch 1, **dadurch gekennzeichnet, dass** das Amin ein Alkanolamin, Diamin, Polyamin und/oder primäres Alkylamin ist.

5. Verfahren nach Anspruch 4, **dadurch gekennzeichnet, dass** das Amin Aminoethanol, Ethylendiamin, Octylamin, oder Diethylentriamin ist.

6. Verfahren nach einem der Ansprüche 1 bis 5, **dadurch gekennzeichnet, dass** der Anteil des Amins im Medium 0.1 bis 5 Gew.-%, vorzugsweise 0.5 bis 2 Gew.-% beträgt.

7. Verfahren nach einem der Ansprüche 1 bis 6, **dadurch gekennzeichnet, dass** die ein oder mehreren Lösungsvermittler ausgewählt sind aus der Gruppe der Alkohole, Ketone, Dialkylsulfoxide, Pyrrolidone, Alkylnitrile, Furane und/oder Dioxane.

8. Verfahren nach einem der Ansprüche 1 bis 7, **dadurch gekennzeichnet dass** die Alkoxygruppe des Tetraalkoxysilans eine Methoxy-, Ethoxy-, Propoxy,- Butoxy-, oder Pentoxygruppe, vorzugsweise eine Ethoxygruppe, ist.

9. Verfahren nach einem der Ansprüche 1 bis 8, **dadurch gekennzeichnet, dass** die hydrolytische Polykondensation bei Temperaturen zwischen 25 und 78°C, vorzugsweise zwischen 30 und 75°C und insbesondere zwischen 40 und 55°C erfolgt.

10. Verfahren nach einem der Ansprüche 1 bis 9, **dadurch gekennzeichnet, dass** bei der hydrolytischen Polykondensation zusätzlich ein oder mehrere Farbstoffe zugesetzt werden.

11. Verfahren nach Anspruch 10, **dadurch gekennzeichnet, dass** der Farbstoff ein Fluoreszenzfarbstoff ist.

12. Verfahren nach einem der Ansprüche 10 und 11, **dadurch gekennzeichnet, dass** der Farbstoff ein terminal silylierter (Fluoreszenz)-Farbstoff der allgemeinen Formel R¹R²R³SiR⁴ ist, in der R¹ R² und R³ gleich oder verschieden sind und für Halogenatome, Alkyl-, Aryl-, Alkoxy- oder Siliyoxy-Gruppen stehen und R⁴ die komplexe Struktur A¹-Bₘ-Cₙ-A² besitzt, in der m und n die Werte Null und 1 annehmen können, A¹ eine Alkylkette oder eine heteroanaloge Struktur mit vorzugsweise 1 bis 30 Kettengliedern bedeutet, B für eine funktionelle Sequenz steht, C eine bifunktionelle organische Sequenz mit Ketten- oder Ringstruktur bedeutet, die mit A² in geeigneter Weise verbunden ist und in der A² für ein fluorophores System oder ein Farbmolekül steht, das strukturell die Möglichkeit bietet, an C, oder wenn n gleich Null ist an B bzw. wenn m und n gleich Null sind an A¹ zu binden.

13. Verfahren nach Anspruch 12, **dadurch gekennzeichnet, dass** die funktionelle Sequenz B in R⁴ für Carbonyl-, Oxycarbonyl-, Aminocarbonyl- bzw. Aminothiocarbonyl-Gruppen oder für ein Heteroatom, beispielsweise Sauerstoff, Stickstoff oder Schwefel, steht.

14. Verfahren nach Anspruch 12 und 13, **dadurch gekennzeichnet, dass** die bifunktionelle Sequenz C in R⁴ vorzugsweise für eine Alkyleneinheit oder für substituierte und heteroanaloge Alkylengruppen steht, die mit A² über ein Kohlenstoff-, Stickstoff-, Sauerstoff- oder Schwefelatom, beispielsweise als Ester oder Amid, verknüpft ist.

15. Verfahren nach einem der Ansprüche 12 bis 14, **dadurch gekennzeichnet, dass** die bifunktionelle Sequenz C in R⁴ für Strukturelemente von Hydroxy- oder Aminocarbonsäuren sowie deren Ester oder Amide steht.

16. Verfahren nach einem der Ansprüche 12 bis 15, **dadurch gekennzeichnet, dass** die Alkoxygruppe eine Methoxy-, Ethoxy-, Propoxy,- Butoxy-, oder Pentoxygruppe, vorzugsweise eine Ethoxygruppe, ist.

## Claims

1. Process for the production of spherical SiO₂ particles by hydrolytic polycondensation of tetraalkoxysilanes and/or organotrialkoxysilanes, **characterised in that** the hydrolytic polycondensation is carried out in a medium comprising water, one or more solubilisers and one or more amines.

2. Process according to Claim 1, **characterised in that** a sol of primary particles is firstly produced, and the resultant SiO₂ particles are subsequently brought to the desired particle size in such a way that further nucleation is prevented by continuous metered addition of corresponding silane controlled to the extent of reaction.

3. Process according to Claim 1 or 2, **characterised in that** the amine is selected from the group of the primary, secondary or tertiary organic amines.

4. Process according to Claim 1, **characterised in that** the amine is an alkanolamine, diamine, polyamine and/or primary alkylamine.

5. Process according to Claim 4, **characterised in that** the amine is aminoethanol, ethylenediamine, octylamine or diethylenetriamine.

6. Process according to one of Claims 1 to 5, **characterised in that** the proportion of the amine in the medium is 0.1 to 5% by weight, preferably 0.5 to 2% by weight.

7. Process according to one of Claims 1 to 6, **characterised in that** the one or more solubilisers are selected from the group of the alcohols, ketones, dialkyl sulfoxides, pyrrolidones, alkyl nitriles, furans and/or dioxanes.

8. Process according to one of Claims 1 to 7, **characterised in that** the alkoxy group of the tetraalkoxysilane is a methoxy, ethoxy, propoxy, butoxy or pentoxy group, preferably an ethoxy group.

9. Process according to one of Claims 1 to 8, **characterised in that** the hydrolytic polycondensation is carried out at temperatures between 25 and 78°C, preferably between 30 and 75°C and in particular between 40 and 55°C.

10. Process according to one of Claims 1 to 9, **characterised in that** one or more dyes are additionally added during the hydrolytic polycondensation.

11. Process according to Claim 10, **characterised in that** the dye is a fluorescent dye.

12. Process according to one of Claims 10 and 11, **characterised in that** the dye is a terminally silylated (fluorescent) dye of the general formula R¹R²R³SiR⁴, in which R¹, R² and R³ are identical or different and stand for halogen atoms, alkyl, aryl, alkoxy or silyloxy groups, and R⁴ has the complex structure A¹-Bₘ-Cₙ-A², in which m and n can adopt the values zero and 1, A¹ denotes an alkyl chain or a heteroanalogous structure, preferably having 1 to 30 chain members, B stands for a functional sequence, C denotes a bifunctional organic sequence having a chain or ring structure which is linked to A² in a suitable manner and in which A² stands for a fluorophoric system or a dye molecule which structurally offers the possibility of bonding to C or, if n is equal to zero, to B or, if m and n are equal to zero, to A¹.

13. Process according to Claim 12, **characterised in that** the functional sequence B in R⁴ stands for carbonyl, oxycarbonyl, aminocarbonyl or aminothiocarbonyl groups or a hetero atom, for example oxygen, nitrogen or sulfur.

14. Process according to Claims 12 and 13, **characterised in that** the bifunctional sequence C in R⁴ preferably stands for an alkylene unit or for substituted and heteroanalogous alkylene groups which are linked to A² via a carbon, nitrogen, oxygen or sulfur atom, for example as an ester or amide.

15. Process according to one of Claims 12 to 14, **characterised in that** the bifunctional sequence C in R⁴ stands for structural elements of hydroxy-or aminocarboxylic acids and esters or amides thereof.

16. Process according to one of Claims 12 to 15, **characterised in that** the alkoxy group is a methoxy, ethoxy, propoxy, butoxy or pentoxy group, preferably an ethoxy group.

## Revendications

1. Procédé de production de particules de SiO₂ sphériques, par la polycondensation hydrolytique de tétraalcoxysilanes et/ou d'organotrialcoxysilanes, **caractérisé en ce que** la polycondensation hydrolytique est effectuée dans un milieu comprenant de l'eau, un ou plusieurs agents solubilisants et une ou plusieurs amines.

2. Procédé selon la revendication 1, **caractérisé en ce qu'**on produit d'abord un sol de particules primaires, et les particules de SiO₂ résultantes sont ensuite amenées jusqu'à la granulométrie désirée d'une façon telle qu'une nucléation supplémentaire est empêchée par l'addition dosée continue de silane correspondant contrôlé selon le degré de réaction.

3. Procédé selon la revendication 1 ou 2, **caractérisé en ce que** l'amine est choisie parmi le groupe constitué par les amines organiques primaires, secondaires ou tertiaires.

4. Procédé selon la revendication 1, **caractérisé en ce que** l'amine est une alcanolamine, une diamine, une polyamine et/ou une alkylamine primaire.

5. Procédé selon la revendication 4, **caractérisé en ce que** l'amine est l'aminoéthanol, l'éthylènediamine, l'octylamine ou la diéthylènetriamine.

6. Procédé selon l'une des revendications 1 à 5, **caractérisé en ce que** la proportion d'amine dans le milieu va de 0,1 à 5% en poids, préférablement de 0,5 à 2% en poids.

7. Procédé selon l'une des revendications 1 à 6, **caractérisé en ce que** le un ou plusieurs agents solubilisants sont choisis parmi le groupe constitué par les alcools, les cétones, les dialkylsulfoxydes, les pyrrolidones, les alkylnitriles, les furanes et/ou les dioxanes.

8. Procédé selon l'une des revendications 1 à 7, **caractérisé en ce que** le groupement alcoxy du tétraalcoxysilane est un groupement méthoxy, éthoxy, propoxy, butoxy ou pentoxy, préférablement un groupement éthoxy.

9. Procédé selon l'une des revendications 1 à 8, **caractérisé en ce que** la polycondensation hydrolytique est effectuée à des températures comprises entre 25 et 78°C, préférablement entre 30 et 75°C et en particulier entre 40 et 55°C.

10. Procédé selon l'une des revendications 1 à 9, **caractérisé en ce qu'**un ou plusieurs colorants sont en outre ajoutés pendant la polycondensation hydrolytique.

11. Procédé selon la revendication 10, **caractérisé en ce que** le colorant est un colorant fluorescent.

12. Procédé selon l'une des revendications 10 et 11, **caractérisé en ce que** le colorant est un colorant (fluorescent) à terminaison silylée de formule générale R¹R²R³SiR⁴, dans laquelle R¹, R² et R³ sont identiques ou différents et représentent des atomes d'halogène, des groupements alkyle, aryle, alcoxy ou silyloxy, et R⁴ possède la structure complexe A¹-Bₘ-Cₙ-A², dans laquelle m et n peuvent revêtir les valeurs zéro et 1, A¹ désigne une chaîne alkyle ou une structure hétéro-analogue, ayant de préférence de 1 à 30 chaînons, B représente une séquence fonctionnelle, C désigne une séquence organique bifonctionnelle ayant une chaîne ou structure cyclique qui est liée à A² de manière convenable et où A² représente un système fluorophore ou une molécule de colorant qui offre sur le plan structurel la possibilité d'une liaison avec C ou, si n est égal à zéro, avec B ou, si m et n sont égaux à zéro, avec A¹.

13. Procédé selon la revendication 12, **caractérisé en ce que** la séquence fonctionnelle B dans R⁴ représente des groupements carbonyle, oxy-carbonyle, aminocarbonyle ou aminothiocarbonyle ou un hétéroatome, par exemple l'oxygène, l'azote ou le soufre.

14. Procédé selon les revendications 12 et 13, **caractérisé en ce que** la séquence bifonctionnelle C dans R⁴ représente de préférence un motif alkylène ou des groupements alkylène hétéro-analogues et substitués qui sont liés à A² par l'intermédiaire d'un atome de carbone, d'azote, d'oxygène ou de soufre, par exemple sous forme d'un ester ou amide.

15. Procédé selon l'une des revendications 12 à 14, **caractérisé en ce que** la séquence bifonctionnelle C dans R⁴ représente des éléments structurels d'acides hydroxy- ou aminocarboxyliques et d'esters ou d'amides de ceux-ci.

16. Procédé selon l'une des revendications 12 à 15, **caractérisé en ce que** le groupement alcoxy est un groupement méthoxy, éthoxy, propoxy, butoxy ou pentoxy, préférablement un groupement éthoxy.
